Europäisches Patentamt

European Patent Office

Office européen des brevets

(11) Veröffentlichungsnummer: **0 382 871**
**A1**

## (12) EUROPÄISCHE PATENTANMELDUNG

(21) Anmeldenummer: 89102741.9

(51) Int. Cl.⁵: **G06F 15/40, G06F 15/20**

(22) Anmeldetag: **17.02.89**

(43) Veröffentlichungstag der Anmeldung:
**22.08.90 Patentblatt 90/34**

(84) Benannte Vertragsstaaten:
**AT BE CH DE ES FR GB GR IT LI LU NL SE**

(71) Anmelder: **TA TRIUMPH-ADLER**
**Aktiengesellschaft**
**Fürther Strasse 212**
**D-8500 Nürnberg 80(DE)**

(72) Erfinder: **Heyer Gerhard Dr.**
**Guntherstrasse 63**
**D-8500 Nürnberg(DE)**
Erfinder: **Kese Ralf**
**Ostendstrasse 20**
**D-8504 Stein(DE)**

(74) Vertreter: **Schneck, Herbert, Dipl.-Phys., Dr. et al**
**Rau & Schneck Patentanwälte Königstrasse 2**
**D-8500 Nürnberg 1(DE)**

(54) **Anordnung und Verfahren zur Bedienungsunterstützung für ein Anwendungssystem.**

(57) Bei einer Anordnung zur Bedienungsunterstützung für ein Anwendungssystem umfassend eine Eingabeeinrichtung (10), eine Eingabekontrolleinrichtung (13), eine Bedeutungsermittlungseinrichtung (14), eine Antwortermittlungseinrichtung (15), eine Ausgabekontrolleinrichtung (16) und eine Ausgabeeinrichtung (12) ist zur Erzielung einer einfachen und zuverlässigen Kommunikation mit dem Anwendungssystem vorgesehen, daß die Antwortermittlungseinrichtung (15) in kommunikativer Verbindung mit einer Anwendungssystem-Schnittstellenanordnung steht, welche insbesondere eine Zustandsverfolgeranordnung (32) umfaßt, welche mit einer Speicheranordnung (31) für das Übergangsnetzwerk und Speichereinrichtungen (33,34,35) für ein Bedienaktionenprotokoll, für ein Zustandsprotokoll und für ein Zielprotokoll in kommunikativer Verbindung steht.

FIG.7

## Anordnung und Verfahren zur Bedienungsunterstützung für ein Anwendungssystem

Die Erfindung richtet sich auf eine Anordnung und ein Verfahren zur Bedienungsunterstützung für ein Anwendungssystem.

Aus der US-PS 4 736 296 ist beispielsweise eine derartige Anordnung und ein Verfahren zur natürlich-sprachlichen Bedienerführung bekannt, wobei der Benutzer eines Terminals den Inhalt eines auszuführenden Befehls oder einer Anfrage in natürlicher Sprache in das Terminal eingeben kann, und wobei das Terminal die Sprache automatisch analysiert und deren Inhalt versteht und eine Befehlsfolge über eine Ausgabeeinrichtung ausgibt, welche erforderlich ist, um das gewünschte Ziel zu erreichen, so daß auch ein ungeübter und mit dem speziellen Terminal nicht vertrauter Benutzer dieses betätigen kann. Bei diesem vorbekannten Verfahren wird zur Antworterzeugung ein Verfahren auf der Basis anwendungsspezifischer Regeln benutzt, welches zwar die spezifischen Eigenschaften des Anwendungssystems, nicht aber dessen Vorgeschichte, d.h. vorhergehende Eingaben und Zustandsänderungen des Anwendungssystems, berücksichtigt.

Hiervon ausgehend liegt der Erfindung die Aufgabe zugrunde, eine Anordnung und ein Verfahren der eingangs genannten Art so auszugestalten, daß der Benutzer einfach und zuverlässig mit dem Anwendungssystem kommunizieren kann, wobei er insbesondere auch die Möglichkeit haben soll, die automatische Durchführung eines gewünschten Befehls zu veranlassen.

Diese Aufgabe wird gelöst durch eine Anordnung zur Bedienungsunterstützung für ein Anwendungssystem umfassend eine Eingabeeinrichtung, eine Eingabekontrolleinrichtung, eine Bedeutungsermittlungseinrichtung, eine Antwortermittlungseinrichtung, eine Ausgabekontrolleinrichtung und eine Ausgabeeinrichtung, wobei die Antwortermittlungseinrichtung in kommunikativer Verbindung mit einer Anwendungssystem-Schnittstellenanordnung steht.

Dabei ist erfindungsgemäß insbesondere vorgesehen, daß die Anwendungssystem-Schnittstellenanordnung eine Zustandsverfolgeranordnung umfaßt, welche mit einer Speicheranordnung für das Übergangsnetzwerk und Speichereinrichtungen für ein Bedienaktionenprotokoll, für ein Zustandsprotokoll und für ein Zielprotokoll in kommunikativer Verbindung steht.

Durch die danach vorgesehene Anwendungssystem-Schnittstellenanordnung und deren spezielle Ausgestaltung ist es möglich, natürlich-sprachliche Eingaben nicht nur zuverlässig bezogen auf das jeweilige Anwendungssystem zu identifizieren und entsprechende Antworten auszugeben, sondern auch eine selbsttätige Ausführung des gewünschten Befehls zu realisieren bzw. Angaben über den Systemzustand zu machen.

Die erfindungsgemäße Anordnung analysiert die natürlich-sprachliche Eingabe des Benutzers und versteht den auf die Bedienung und den Zustand des Anwendungssystems bezogenen Inhalt. Danach kann die Anordnung entweder die Anfrage z.B. in Form einer Ausgabe von Text und/oder Grafik beantworten oder eine Rückfrage stellen. Bei Antwort und Rückfrage können aufgrund der Anwendungssystem-Schnittstellenanordnung der aktuelle Zustand des Anwendungssystems und die vorangegangenen Bedienaktionen berücksichtigt werden. Für den Fall, daß die Antwort der Anordnung aus der Beschreibung von Bedienaktionen besteht, welche über die Ausgabeeinrichtung ausgegeben werden, kann dem Benutzer die bereits angesprochene selbsttätige Ausführung angeboten werden.

Die vorgesehene Eingabeeinrichtung kann sich aus einer oder mehreren Eingabeeinrichtungen, wie z.B. Tastatur, Regler, Spracheingabe, Meßfühler zusammensetzen. Mindestens eine dieser Eingabeeinrichtungen kann durch eine menschliche Bedienungsperson beeinflußt werden, wobei in der Regel ein Befehl durch Ausführung einer oder mehrerer Bedienaktionen an den Bedienelementen der Eingabeeinrichtung eingegeben wird.

Das Anwendungssystem bzw. dessen Ausführungseinheit realisiert die Befehle des Bedieners, wobei die Wirkung der Befehle vom Betriebszustand des Anwendungssystems abhängen kann.

Dabei werden Anfragen vom Typ "Wie kann ich das Anwendungsziel Z erreichen?" mit einer oder mehreren Sequenzen von Bedienungsanweisungen beantwortet, falls das Anwendungsziel in dem jeweiligen Anwendungssystem erreichbar ist. Werden mehrere Sequenzen angegeben, so kann eine davon vom Bediener ausgewählt werden, um das Anwendungsziel Z zu erreichen. Ein Anwendungsziel Z kann sowohl ein einfaches Ziel, das durch einen Befehl an das Anwendungssystem erreicht wird, als auch ein komplexes Ziel sein, das nur durch mehrere nacheinander ausgeführte Befehle erreichbar ist. Nach Möglichkeit wird dem Benutzer der erfindungsgemäßen Anordnung die automatische Ausführung einer zum Anwendungsziel führenden Sequenz von Bedienaktionen angeboten.

Anfragen vom Typ "Wozu dient das Bedienelement E?" werden mit einer Beschreibung der Anwendungssystemfunktion beantwortet, die das Bedienelement auslösen kann. Falls diese Funktion vom Zustand

2

EP 0 382 871 A1

des Anwendungssystems abhängig ist, kann auf die Funktion im aktuellen Systemzustand besonders hingewiesen werden.

Anfragen vom Typ "Was bedeutet der Begriff B?" werden mit einer entsprechenden Begriffserklärung beantwor tet, falls der Begriff in den berücksichtigbaren Themenbereich gehört.

Anfragen vom Typ "Wo ist das Bedienelement E?" werden mit einer Beschreibung der Position des Bedienelements beantwortet, z.B. mit einer grafischen Darstellung der entsprechenden Eingabeeinrichtung, wobei das gesuchte Bedienelement besonders kenntlich gemacht ist.

Anfragen vom Typ "Welchen Wert hat der Parameter P des Anwendungssystems?" werden mit dem entsprechenden aktuellen Wert beantwortet.

Anfragen vom Typ "Warum ist das Anwendungsziel Z erreicht worden?" werden mit der für dieses Ziel ursächlich verantwortlichen und tatsächlich ausgeführten Sequenz von Bedienaktionen beantwortet, falls das Ziel wirklich erreicht worden ist, oder aber mit einem entsprechenden Hinweis, falls das als erreicht vorausgesetzte Ziel tatsächlich nicht erreicht worden ist.

Anfragen vom Typ "Warum ist das Anwendungsziel Ziel nicht erreich worden?" werden, falls das Ziel wirklich nicht erreicht worden ist, durch Angabe der fehlerhaften, tatsächlich ausgeführten Sequenz von Bedienaktionen und der zum Erreichen des Ziels notwendigen Sequenz von Bedienaktionen beantwortet. Auch hier wird dem Benutzer falls möglich die automatische Ausführung dieser Bediensequenzen angeboten.

Bei der erfindungsgemäßen Anordnung können als Eingabeeinrichtungen neben einer Tastatur übliche Mikro phone für die akustische Spracheingabe verwendet werden. Die Ausgabeeinrichtung kann durch einen Bildschirm, Drucker und/oder eine akustische Sprachausgabe gebildet werden.

Eine Verarbeitungseinrichtung umfaßt die Eingabekontrolleinrichtung, die Bedeutungsermittlungseinrichtung, die Antwortermittlungseinrichtung und die Ausgabekontrolleinrichtung sowie die Anwendungssystem-Schnittstellenanordnung.

Die Eingabekontrolleinrichtung steuert die Eingabe der natürlich-sprachlichen Anfrage von der Eingabeeinrichtung wie auch die Ausgabekontrolleinrichtung die Ausgabe der Antworten bzw. Rückfragen zur Ausgabeeinrichtung kontrolliert.

Die Bedeutungsermittlungseinrichtung transformiert den eingegebenen natürlich-sprachlichen Satz, der in Form einer Zeichenkette vorliegt, in eine semantische Repräsentation. Die semantische Repräsentation gibt die Bedeutung des Satzes innerhalb des statischen Kontextes wieder. "Statischer Kontext" bedeutet in diesem Zusammenhang, daß für die Bedeutungsermittlung auch Wissen über das Anwendungssystem einbezogen wird, jedoch nicht über den aktuellen Zustand des Anwendungssystems. Insofern entspricht dieser Teil der erfindungsgemäßen Anordnung dem eingangs gewürdigten Stand der Technik.

Die Antwortermittlungseinrichtung erhält die erweiterte Bedeutung des eingegebenen natürlich-sprachlichen Satzes, indem neben der von der Bedeutungsermittlungseinrichtung erhaltenen semantischen Repräsentation auch der aktuelle Zustand des Anwendungssystems, die bisher ausgeführten Bedienaktionen und die bisher erreichten Zustandsänderungen und Anwendungsziele mit einbezogen werden. Der erweiterten Satzbedeutung wird dann eine Antwort oder, falls die Anfrage unvollständig ist, eine Rückfrage zugeordnet. Antwort und Rückfrage beziehen den aktuellen Anwendungssystemzustand mit ein, wobei alle Informationen, die diesen aktuellen Zustand des Anwendungssystems kennzeichnen, von der Anwendungssystem-Schnittstelleneinrichtung geliefert werden.

Diese Anwendungssystem-Schnittstelleneinrichtung kann alle Informationen über den aktuellen Zustand des Anwendungssystems liefern. Sie kann auch Auskunft geben über bisher ausgeführte Bedienaktionen, die dadurch hervorgerufenen Zustandsänderungen des Anwendungssystems und über die bisher vom Bediener erreichten Anwendungsziele. Zudem kann sie die Wirkung von Bedienaktionen im Anwendungssystem auslösen.

Die spezielle Ausgestaltung der Anwendungssystem-Schnittstelleneinrichtung ist weitgehend von dem spezifischen Anwendungssystem abhängig. Wie bereits angedeutet, hat sie die Aufgabe, der Bedeutungsermittlungseinrichtung einen Satz von Funktionen zur Verfügung zu stellen, der alle notwendigen Informationen über das Anwendungssystem liefert. Dies sind sowohl Informationen über den aktuellen Zustand des Anwendungssystems als auch solche, welche die erfolgte Bedienung des Anwendungssystems betreffen, insbesondere bisher ausgeführte Bedienaktionen, bisher erfolgte Zustandsänderungen des Anwendungssystems sowie bisher erreichte Anwendungsziele. Bezüglich der Zustände des Anwendungssystems werden nur die unterschieden, die eine unterschiedliche Bedienung zur Erreichung eines Anwendungszieles notwendig machen können. Die Anwendungssystem-Schnittstelleneinrichtung stellt auch eine Funktion zur Verfügung, die die Wirkung der in der Funktion genannten Bedienaktionen im Anwendungssystem auslösen kann.

Die Anwendungssystem-Schnittstelleneinrichtung benötigt vom Anwendungssystem Informationen, um

3

ihre Aufgabe erfüllen zu können. Diese Informationen können vom Anwendungssystem gewonnen werden, wenn dort Eingriffe an den informationsführenden Stellen möglich sind.

In den meisten Fällen umfaßt die Anwendungssystem-Schnittstellenanordnung einen Speicher für ein Übergangsnetzwerk, welches ein Zustandsmodell des Anwendungssystems darstellt. Es enthält somit abrufbar das Wissen über alle möglichen Zustände und Zustandsübergänge, die für die Bedienung des Anwendungssystems von Bedeutung sein können. In dem Langzeitspeicher ist diese Struktur abgelegt. Darüber hinaus kann ein entsprechendes Modul auch Register (Kurzzeitspeicher) enthalten, die jeweils aktuelle Werte von Parametern des Anwendungssystems enthalten.

Die Zustandsverfolgeranordnung liefert die Übergangsnetzwerk-Langzeitspeicher-Bezeichner für die vom Be diener ausgeführten Bedienaktionen, so daß der Zustandsübergang zum neuen Zustand, der dem neuen Zustand des Anwendungssystems entspricht, vollzogen werden kann, und die Register für die Parameterwerte aktualisiert werden können.

Die Zustandsverfolgeranordnung greift an der Verbindung zwischen der Eingabeeinheit des Anwendungssystems und dessen Ausführungseinheit ein und identifiziert alle vom Bediener ausgeführten Bedienaktionen und trägt diese Bedienaktionen in das Bedienaktionenprotokoll ein. Mit Hilfe von Informationen über den Zustand des Anwendungssystems aus dem Übergangsnetzwerk-Langzeitspeicher wird das Zustandsprotokoll und das Zielprotokoll aktualisiert. Im Zustandsprotokoll werden Bezeichner für die Zustände eingetragen, die das Anwendungssystem bisher durchlaufen hat. Im Zielprotokoll sind alle bisher erreichten einfachen Anwendungsziele verzeichnet. Derartige einfache Anwendungsziele sind dadurch charakterisiert, daß sie durch einen einzigen Bedienbefehl erreicht werden können. Jedes dieser Ziele korrespondiert mit einem ausgezeichneten Zustandsübergang in dem abgespeicherten Übergangsnetzwerk. Der Zustandsverfolger liefert dem Langzeitspeicher für das Übergangsnetzwerk die Beschreibungen der erfolgten Bedienaktionen und damit die notwendige Information, um Zustand und Parameterwerte zu aktualisieren.

In weiterer Ausgestaltung der Erfindung ist vorgesehen, daß die Bedeutungsermittlungseinrichtung ein Lexikonmodul zur Abspeicherung eines Vokabulars und eines Algorithmus zur Aufteilung eines Eingabesatzes in Wörter dieses Vokabulars und ein Parsermodul zur Abspeicherung syntaktosemantischer Regeln und eines Algorithmus zur Anwendung dieser Regeln zur Bildung einer semantischen Repräsentation aus den vorliegenden Kategorie-Wortnamen-Paaren umfaßt.

Im Zusammenhang mit dem Lexikonmodul ist anzumerken, daß für alle Synonyme eines Wortes der gleiche Wortname verwendet wird. Die Kategorie eines Wortes ist Bezeichner für bestimmte syntaktische und semantische Informationen dieses Wortes. Ausgabe ist eine Folge von Kategorie-Wortnamen-Paaren und eine Liste von Wörtern, die nicht im Vokabular des Lexikons enthalten sind.

Das Parsermodul erzeugt eine semantische Repräsentation, welche aus einem Fragetyp (wie?, warum?, warum nicht?, wo?, wozu? usw.) sowie den notwendigen und möglichen Argumenten, d.h. angesprochenen Größen. Es ist aus der semantischen Repräsentation zu entnehmen, ob der Fragetyp oder notwendige Argumente fehlen.

In weiterer Ausgestaltung der Erfindung ist vorgesehen, daß die Antwortermittlungseinrichtung eine Antworttyp-Erkennungseinrichtung, ein Rückfragemodul, ein Standardantwortmodul und ein Situationsantwortmodul umfaßt, wobei die Antworttyperkennungseinrichtung in Abhängigkeit von der semantischen Repräsenation des Eingabesatzes mit einem der drei Module kommuniziert.

Das Rückfragemodul ordnet der semantischen Repräsentation des Eingabesatzes einen natürlich-sprachlichen Text zu, der den Benutzer auffordert, die notwendigen, aber fehlenden Informationen zur Ergänzung der semantischen Repräsentation einzugeben. Falls es für die Ergänzung nur einige wenige sinnvolle Möglichkeiten gibt, werden ihm diese Möglichkeiten zur Auswahl angeboten.

Das Standardantwortmodul ist für alle Antworten zuständig, die vom aktuellen Zustand und von den vorausgegangenen Zuständen des Anwendungssystems unabhängig sind. Es ordnet der semantischen Repräsentation eine Folge von Textbausteinen zu, die aneinandergereiht die natürlich-sprachliche Antwort der Benutzerfrage darstellen.

Das Situationsantwortmodul ist für alle Antworten zuständig, die vom aktuellen Zustand oder den vorausgegangenen Zuständen des Anwendungssystems, den vorher erreichten Zielen oder den vorher gemachten Bedienaktionen abhängen. Es ordnet der semantischen Repräsentation des Eingabesatzes eine Folge von Textbausteinen und mit den aktuellen Werten des Anwendungssystems gefüllten Textschablonen zu. Alle Informationen über das Anwendungssystem, die zum Ausfüllen der Textschablonen notwendig sind, erhält dieses Modul von der Anwendungssystem-Schnittstelleneinrichtung, welche bereits beschrieben wurde.

Vorteilhafterweise ist gemäß der Erfindung vorgesehen, daß der Ausführungsanordnung des Anwendungssystems ein Ausführungsmodul vorgeschaltet ist, welches mit der Antwortermittlungseinrichtung verbunden ist. Das Ausführungsmodul weist als Eingabe Bezeichner für Bedienaktionen auf. Es greift an der Stelle zwischen Eingabeeinheit des Anwendungssystems und dessen Ausführungseinheit so ein, daß im Anwendungssystem dieselben Effekte entstehen wie sie entstehen würden, wenn die richtigen Bedienaktionen vom Bediener an den Eingabeeinrichtungen vorgenommen würden. Das Ausführungsmodul ist damit praktisch dem Ausführungsteil der Anordnung zugeordnet und kommuniziert mit dem das Übergangsnetzwerk enthaltenden Langzeitspeicher.

Ein Anwendungssystem, in Verbindung mit welchem die erfindungsgemäße Anordnung und das erfindungsgemäße Verfahren besonders günstig realisiert werden können, stellt ein Textsystem dar, d.h. also ein System, nach welchem ein sogenannter Schreibautomat arbeitet.

Die eingangs genannte Aufgabe wird auch durch das in den Ansprüchen charakterisierte erfindungsgemäße Verfahren gelöst, welches vorstehend im Zusammenhang mit der erfindungsgemäßen Anordnung bereits beschrieben wurde.

Nachfolgend wird eine bevorzugte Ausführungsform der Erfindung im Zusammenhang mit der Zeichnung näher erläutert. Die Zeichnung zeigt blockschaltbildartige, schematische Darstellungen von Teilen der erfindungsgemäßen Anordnung bzw. des Anwendungssystems, für welche die Anordnung bestimmt ist, nämlich

Fig. 1 des Anwendungssystems,
Fig. 2 eines Ausführungsbeispiels des Anwendungssystems,
Fig. 3 der Grundbausteine der erfindungsgemäßen Anordnung,
Fig. 4 der Verarbeitungsanordnung
Fig. 5 der Bedeutungsermittlungseinrichtung,
Fig. 6 der Antwortermittlungseinrichtung,
Fig. 7 des Übergangsnetzwerk-Speichers und der zugeordneten Anordnungen und
Fig. 8 eine grafische Repräsentation des abgespeicherten Übergangsnetzwerkes.

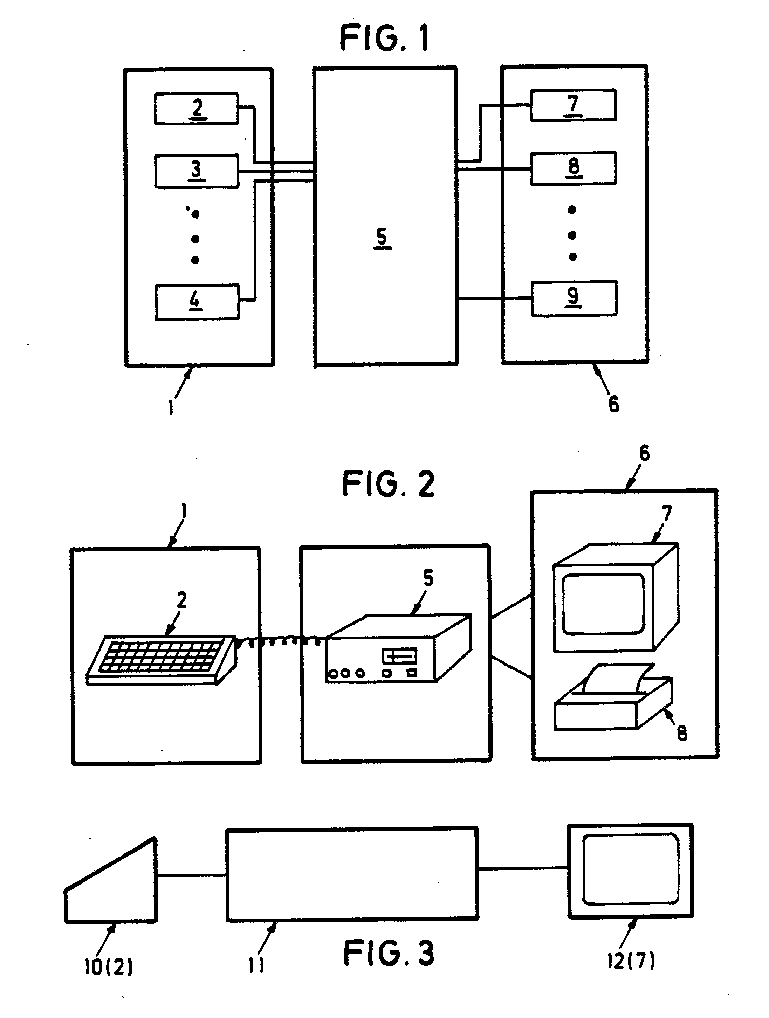

In Fig. 1 ist ganz allgemein ein Anwendungssystem dargestellt, welches eine Eingabeanordnung 1 mit einer Mehrzahl von einzelnen Eingabeeinrichtungen 2,3,4 umfaßt, eine Ausführungsanordnung 5 und eine Ausgabeanordnung 6 mit einer Mehrzahl von Ausgabeeinrichtungen 7,8,9 aufweist.

Im konkreten Fall der Ausgestaltung des Anwendungssystems als Textsystem ist, wie in Fig. 2 dargestellt, eine Eingabeeinrichtung 2 eine Tastatur, die Ausführungsanordnung 5 ein Rechner mit Textprogramm und die Ausgabeanordnung 6 umfaßt als Ausgabeeinrichtungen 7 und 8 einen Monitor und einen Drucker.

Eine in Fig. 3 in ihren Grundkomponenten dargestellte erfindungsgemäße Anordnung zur Erleichterung der Benutzung des in Fig. 1 und 2 dargestellten Anwendungssystems umfaßt eine Eingabeeinrichtung 10, welche mehrere Teileingabeeinrichtungen aufweisen kann, eine Verarbeitungsanordnung 11 und eine Ausgabeeinrichtung 12, welche ihrerseits wiederum mehrere Unterausgabeeinrichtungen aufweisen kann.

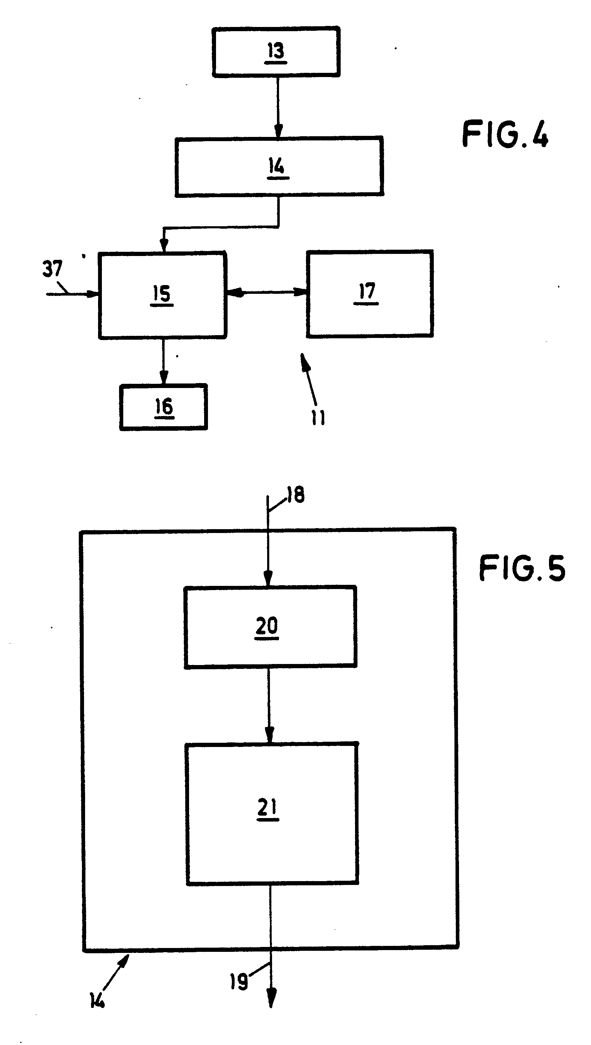

Die Verarbeitungseinrichtung 11, deren Aufgliederung in Fig. 4 dargestellt ist, umfaßt eine Eingabekontrolleinrichtung 13, eine dieser nachgeordnete Bedeutungsermittlungseinrichtung 14, eine dieser wiederum nachgeordnete Antwortermittlungseinrichtung 15 sowie dieser nachgeordnet eine Ausgabekontrolleinrichtung 16. Wesentlich ist, daß die Anwendungsermittlungseinrichtung 15 in Wechselwirkung steht mit einer Anwendungssystem-Schnittstelleneinrichtung 17.

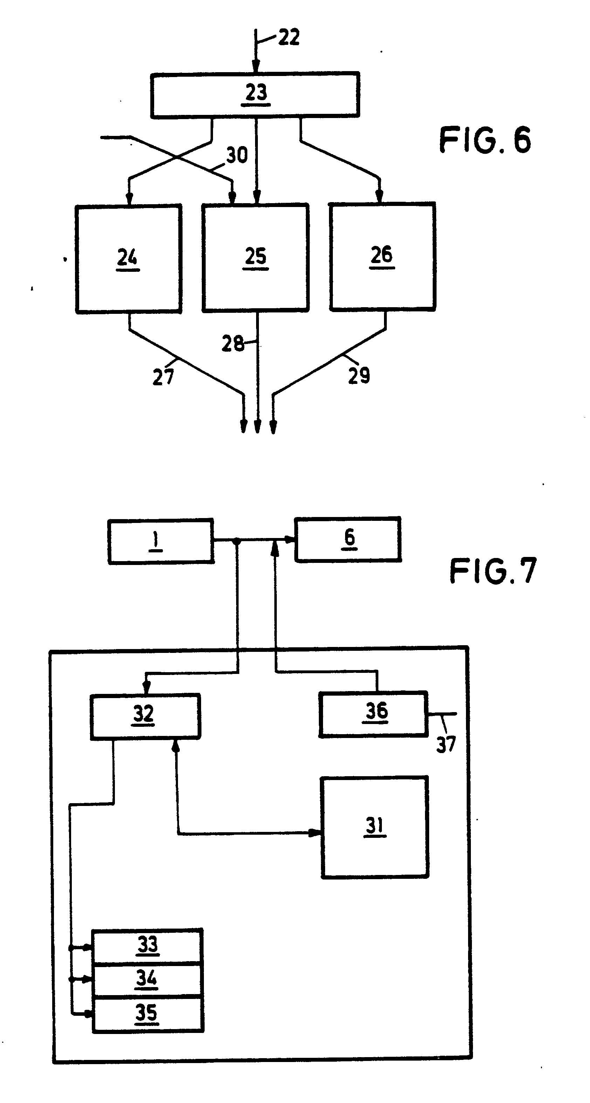

In Fig. 5 ist die Bedeutungsermittlungseinrichtung 14 dargestellt, welche einen Eingang 18 von der Eingabekontrolleinrichtung 13 und einen Ausgang 19 zur Antwortermittlungseinrichtung 15 aufweist und ein Lexikonmodul 20 sowie ein Parsermodul 21 umfaßt.

Die in Fig. 6 dargestellte Antwortermittlungseinrichtung weist einen Eingang 22 von der Bedeutungsermittlungseinrichtung kommend und zu einer Antworttyp-Erkennungseinrichtung 23 führend auf.

Der Antworttyp-Erkennungseinrichtung 23 ist ein Rückfragemodul 24, ein Situationsantwort-Modul 25 und ein Standardantwortmodul 26 nachgeordnet, welche Ausgänge 27 bzw. 28 bzw. 29 zur Ausgabekontrolleinrichtung 16 aufweisen. Das Situationsantwort-Modul 25 weist außerdem noch einen Eingang 30 von der Anwendungssystem-Schnittstelleneinrichtung 17 kommend auf.

In Fig. 7 sind die Komponenten um die Übergangsnetzwerk-Speicheranordnung 31 dargestellt, welche einer Zustandsverfolgereinrichtung 32 zugeordnet ist, welcher wiederum ein Bedienaktionenprotokoll-Speicher 33, Zustandsprotokoll-Speicher 34 und Zielprotokoll-Speicher 35 zugeordnet sind. Weiterhin ist ein Ausführungsmodul 36 vorgesehen, welches über einen Eingang 37 mit der Antwortermittlungseinrichtung 15 verbunden ist.

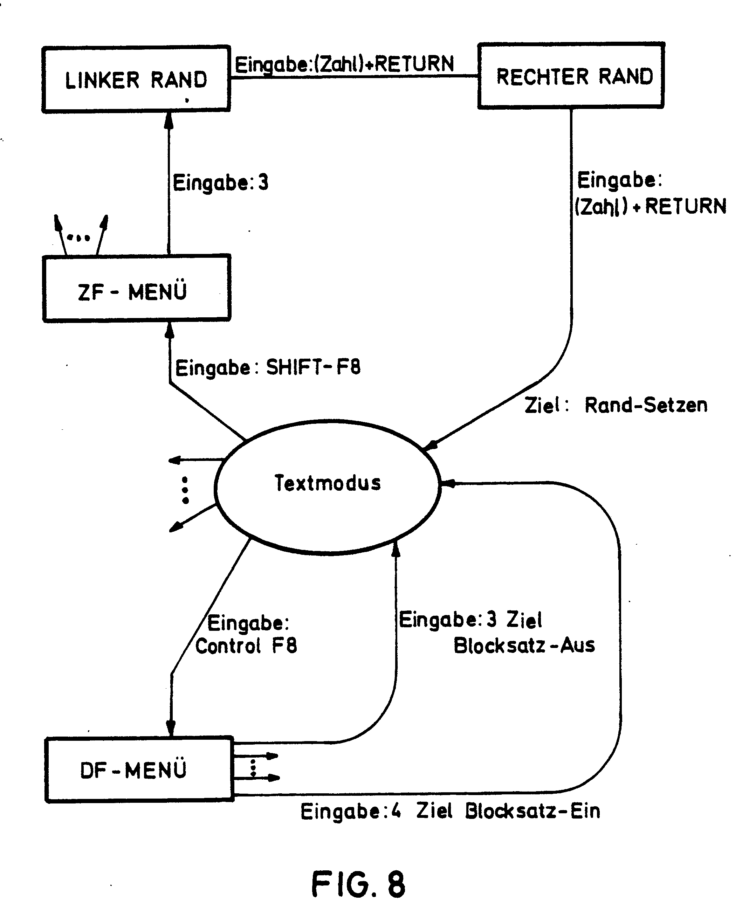

Das in Fig. 8 dargestellte, im Speicher abgespeicherte Übergangsnetzwerk wird in seiner Bedeutung und seinem Inhalt im Zusammenhang mit der nachfolgend beschriebenen Funktion der erfindungsgemäßen Anordnung und des erfindungsgemäßen Verfahrens deutlich:

In dem nachfolgend betrachteten Ausführungsbeispiel ist das Anwendungssystem ein Textsystem mit einer Eingabetastatur 2, einem Bildschirm 7 und einem Drucker 8 als Ausgabeeinrichtung und einem Rechner 5 mit Textprogramm als Verarbeitungsanordnung.

Die Anordnung zur Bedienungserleichterung weist als Eingabeeinrichtung 10 eine Tastatur und als Ausgabeeinrichtung 12 den Bildschirm 7 des Anwendungssystems auf. Die erfindungsgemäße Anordnung, d.h. also das Hilfssystem, ist, wie in Fig. 7 schematisch angedeutet, zwischen Eingabeeinrichtung 1 und Ausgabeeinrichtung 6 des Textsystems eingeschaltet.

Es wird nun angenommen, daß der Bediener des Textsystems einen Brief erstellt und dabei einen linken Seitenrand von 20 und einen rechten Seitenrand von 60 einstellen und anschließend das BLOCKSATZ-Kommando erteilen will.

Er drückt hierzu die Tasten "SHIFT-F8" und "3" und wird vom Textsystem aufgefordert, einen Wert für den linken Rand einzugeben. Er gibt "2", "0" und "RETURN" ein, wird aufgefordert einen Wert für den rechten Rand einzugeben und drückt die Rasten "6", "0", "RETURN". Damit ist das Rändersetzen erfolgreich beendet.

Der Bediener möchte nun BLOCKSATZ einschalten. Er drückt die Tasten "CONTROL-F8", "3" und "RETURN" und hat damit versehentlich den Befehl '"BLOCKSATZ-AUS" gegeben. Für den Befehl "BLOCKSATZ-EIN" wäre die Tastenfolge "CONTROL-F8", "4", "RETURN" richtig gewesen. Da der Bediener nicht das erwünschte Ergebnis erhält, ruft er die als Hilfesystem dienende erfindungsgemäße Anordnung auf. Das Hilfesystem fordert ihn auf, eine Frage zu stellen. Er gibt die folgende Frage ein: "WHY IS THERE NO RIGHT JUSTIFICATION?"

Diese Zeichenkette wird von der Eingabekontrolleinrichtung 13 zum Lexikonmodul 20 der Bedeutungsermittlungseinrichtung 14 weitergegeben. Das Lexikonmodul prüft bei jedem Wort des Eingabesatzes, ob es im Lexikon enthalten ist. Die unbekannten Wörter werden in einer Liste aufgesammelt. Die Liste ist in diesem Beispiel leer, da alle Wörter dem Lexikon bekannt sind. Jedem Schlüsselwort des Eingabesatzes wird eine Kategorie und ein Wortname zugeordnet. Den Wörtern "IS" und "THERE" wird keine Kategorie zugewiesen, da sie hier für die Sprachbedeutung keinen wesentlichen Beitrag liefern. Die Liste der Kategorie-Wortnamen-Paare hat hier die Form:
QWORD("WARUM"), NEGATION("NO"),
FUNCTION("BLOCKSATZ-EIN")

Das Parsermodul 21 wandelt diese Darstellung mit Hilfe von syntaktosemantischen Regeln in eine Repräsentation der Sprachbedeutung des Eingabesatzes. Die Repräsentation der Sprachedeutung spezifiziert hier den erkannten Fragetyp (WARUM-NICHT) und das Textverarbeitungsziel (BLOCKSATZ-EIN):
Query = questionOperator(WARUM-NICHT),
effectedObject(BLOCKSATZ-EIN)

Die Antworttyperkennungseinrichtung 23 stellt anhand dieser semantischen Repräsentation fest, daß die Frage eine Antwort verlangt, die vom aktuellen Zustand des Anwendersystems und/oder von den vorangegangenen Be dienaktionen abhängig ist und beauftragt deshalb das Situationsantwortmodul 25 mit der Antwortberechnung.

Das Situationsantwortmodul 25 benötigt zur Antwortberechnung Informationen über das bisherige Geschehen im Textsystem. Es muß die drei Protokolle Bedienaktionenprotokoll (Speicher 33) (in diesem Anwendungsfall Tastenprotokoll genannt), Zustandsprotokoll (Speicher 34) und Zielprotokoll (Speicher 25) auswerten. Diese Protokolle werden von der Anwendungssystem-Schnittstelleneinrichtung 17, die hier ein Übergangsnetzwerksystem ist, zur Verfügung gestellt.

Diese Protokolle werden bereits während der Textverarbeitungssitzung erstellt. Die Zustandsverfolgereinrichtung 32 notiert jede vom Bediener ausgeführte Bedienaktion im Tastenprotokoll (Speicher 33) bevor die Wirkung des Tastendrucks das Textsystem erreicht. Zudem gibt die Zustandsverfolgereinrichtung 32 die Information über den Tastendruck an den Übergangsnetzwerk-Speicher 31 (siehe Fig. 8) weiter. Der Übergangsnetzwerk-Speicher 31 geht dann in den Zustand über, der dem neuen Textsystemzustand entspricht und liefert der Zustandsverfolgereinrichtung 32 diese Zustandsinformation. Die Zustandsverfolgereinrichtung 32 kann daraufhin das Zustandsprotokoll (Speicher 34) und das Zielprotokoll (Speicher 35) ergänzen.

In der aktuellen Situation haben die drei Protokolle folgende Gestalt:

| Tastenprotokoll: | Zustandsprotokoll: | Zielprotokoll |
|---|---|---|
| SHIFT-F8, 3, 2, 0, RETURN, 6, 0, RETURN, CONTROL-F8, 3, RETURN. | TEXTMODUS, ZF-MENÜ, LINKER RAND, RECHTER RAND, TEXTMODUS, DF-MENÜ, TEXTMODUS. | RÄNDER-SETZEN. BLOCKSATZ-AUS. |

Das Situationsantwortmodul 25 prüft anhand des Zielprotokolls, ob wirklich kein erfolgreiches BLOCKSATZ-Kommando gegeben worden ist. Wäre dies der Fall, so würde als Antwort gegeben, daß BLOCKSATZ bereits erfolgreich gemacht worden sei. In diesem Beispiel aber findet sich kein Eintrag "BLOCKSATZ-EIN" im Zielprotokoll und deshalb wird die Frage mit der Angabe der fehlerhaften Tastensequenz und der zum Erfolg führenden Tastensequenz beantwortet.

Das Situationsantwortmodul 25 beauftragt den Übergangsnetzwerk-Speicher 31, die Tastensequenz zu finden, die zum gewünschten Ziel führt. Der Übergangsnetzwerk-Speicher 31 liefert hier:

CONTROL-F8, 4, RETURN

Diese richtige Tastensequenz wird in einem Register des Ausführungsmoduls 36 gespeichert, um sie verfügbar zu haben, wenn der Benutzer die automatische Ausführung wünscht.

Um die fehlerhafte Tastensequenz zu finden, wird jeweils eine Tastenfolge aus dem Tastenprotokoll herausgesucht, die einem ganzen Pfad im Zustandsprotokoll entspricht. Ein ganzer Pfad im Zustandsprotokoll reicht vom Zustand "TEXTMODUS" bis zum darauf folgenden Zustand "TEXTMODUS". In diesem Beispiel sind dies die Zustandssequenzen

TEXTMODUS, DF-MENÜ, TEXTMODUS und

TEXTMODUS, ZF-MENÜ, LINKER-RAND, RECHTER-RAND, TEXTMODUS.

Die zugeordneten Tastenfolgen im Tastenprotokoll sind

CONTROL-F8, 3, RETURN und

SHIFT-F8, 3, 2, 0, RETURN, 6, 0, RETURN.

Als fehlerhafte Tastenfolge wird nun die jüngste Tastensequenz angenommen, die in der Anfangssequenz mit der richtigen Tastenfolge übereinstimmt. Gibt es keine anfangssequenzgleiche Tastenfolge, so wird angenommen, daß die jüngste Tastenfolge die fehlerhafte ist. Der Vergleich mit der richtigen Tastenfolge CONTROL-F8, 4, RETURN ergibt, daß die fehlerhafte Tastenfolge CONTROL-F8, 3, RETURN ist.

Als Antwort wird die Zeichenkette

"You did CONTROL-F8, 3, RETURN instead of

CONTROL-F8, 4, RETURN !"

über die Ausgabekontrolleinrichtung 16 zum Bildschrim gesendet. Ebenfalls zum Bildschirm gesendet wird eine Zeichenkette, die das Angebot enthält, das angestrebte Ziel automatisch zu erreichen:

"Do you want to ask another question (y/n)

or shall i do it (d)?"

Über die Tastatur 2 und die Eingabekontrolleinrichtung 13 wird die Antwort des Benutzers eingelesen. Falls er die automatische Ausführung wünscht, wird das Ausführungsmodul 36 beauftragt, die Wirkung der Tastensequenz CONTROL-F8, 4, RETURN im Textsystem zu erzeugen.

Das Ausführungsmodul 36 sendet daraufhin zum Textsystem die gleichen Signale, die die Betätigung der angegebenen Tasten zur Folge gehabt hätten. Damit wird das Textverarbeitungsziel ("BLCOKSATZ-EIN") genauso erreicht, als hätte der Benutzer selbst die richtigen Eingaben gemacht.

**Ansprüche**

1. Anordnung zur Bedienungsunterstützung für ein Anwendungssystem umfassend

eine Eingabeeinrichtung (10)

eine Eingabekontrolleinrichtung (13)

eine Bedeutungsermittlungseinrichtung (14)

eine Antwortermittlungseinrichtung (15)

eine Ausgabekontrolleinrichtung (16) und

eine Ausgabeeinrichtung (12),
wobei die Antwortermittlungseinrichtung in kommunikativer Verbindung mit einer Anwendungssystem-Schnittstellenanordnung (17) steht.

2. Anordnung nach Patentanspruch 1, dadurch gekennzeichnet, daß die Anwendungssystem-Schnittstellenanordnung (17) eine Zustandsverfolgeranordnung (32) umfaßt, welche mit einer Speicheranordnung (31) für das Übergangsnetzwerk und Speichereinrichtungen (33,34,35) für ein Bedienaktionenprotokoll, für ein Zustandsprotokoll und für ein Zielprotokoll in kommunikativer Verbindung steht.

3. Anordnung nach Patentanspruch 1, dadurch gekennzeichnet, daß die Bedeutungsermittlungseinrichtung (14) ein Lexikonmodul (20) zur Abspeicherung eines Vokabulars und eines Algorithmus zur Aufteilung eines Eingabesatzes in Wörter dieses Vokabulars und ein Parsermodul (21) zur Abspeicherung syntaktosemantischer Regeln und eines Algorithmus zur Anwendung dieser Regeln zur Bildung einer semantischen Repräsentation aus den vorliegenden Kategorie-Wortnamen-Paaren umfaßt.

4. Anordnung nach Patentanspruch 1, dadurch gekennzeichnet, daß die Antwortermittlungseinrichtung (15) eine Antworttyperkennungseinrichtung (23), ein Rückfragemodul (24) ein Standardantwortmodul (26) und ein Situationsantwortmodul (25) umfaßt, wobei die Antworttyperkennungseinrichtung (23) in Abhängigkeit von der semantischen Repräsentation des Eingabesatzes mit einem der drei Module (24,25,26) kommuniziert.

5. Anordnung nach Patentanspruch 1, dadurch gekennzeichnet, daß ein Ausführungsmodul (36) für die Ausführungsanordnung (2) des Anwendungssystems vorgesehen ist, welches mit der Antwortermittlungseinrichtung (15) verbunden ist.

6. Anordnung nach Patentanspruch 1, dadurch gekennzeichnet, daß das Anwendungssystem ein Textsystem ist.

7. Verfahren zum Betrieb eines Anwendungssystems umfassend
das Abspeichern der in dem Anwendungssystem grundsätzlich möglichen Betriebszustandsänderungen in Form eines Übergangsnetzwerkes in einer einen Langzeitspeicher umfassenden Anwendungssystem-Schnittstelleneinrichtung das Abspeichern der durch einen Bediener bei einem Bedienungsvorgang konkret eingegebenen Befehle in einem Kurzzeitspeicher der Anwendungssystem-Schnittstellenanordnung unter Erstellung eines Bedienaktionenprotokolls, eines Zustandsprotokolls und eines Zielprotokolls und
das Vergleichen des abgespeicherten Übergangsnetzwerkes mit den erstellten Protokollen mittels einer Zustandsverfolgeeinrichtung zur Ermittlung der Zulässigkeit einer Eingabefolge bzw. zur Ermittlung des gewünschten Bedeutungsinhaltes der Eingabe.

8. Verfahren nach Patentanspruch 7, dadurch gekennzeichnet, daß nach Feststellung einer unzulässigen Eingabefolge und Ermittlung der vom Bediener an sich gewünschten Eingabe mittels eines Ausführungsmoduls die Ausführung des gewünschten Befehls durch die Ausführeinrichtung veranlaßbar ist.

# FIG. 1

# FIG. 2

# FIG. 3

FIG.4

FIG.5

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | US-A-4 736 296 (Y. KATAYAMA et al.) <br> * Ansprüche 1-14; Figuren 4-5 * | 1-8 | G 06 F 15/40 <br> G 06 F 15/20 |
| X | US-A-4 689 737 (R. GRANT) <br> * Ansprüche 1-11 * | 1,5 | |
| A | FUTURE GENERATIONS COMPUTER SYSTEMS, Band 1, Nr. 2, November 1984, Seiten 103-111, Amsterdam, NL; W. WAHLSTER: "Cooperative access systems" <br> * Zusammenfassung * | 6 | |
| A | EP-A-0 118 187 (TEXAS INSTRUMENTS) <br> * Zusammenfassung * | 1-8 | |
| A | THIRD ANNUAL EXPERT SYSTEMS IN GOVERNMENT CONFERENCE, Washington, D.C., 19.-23. Oktober 1987, Seiten 55-64, IEEE, New York, US; H. NEELAKANDAN et al.: "An intelligent assistance system in the Unix domain" | | RECHERCHIERTE SACHGEBIETE (Int. Cl.5) |
| A | CONFERENCE PROCEEDINGS IEEE SOUTHEASTCON '87, Tampa, 5.-8. April 1987, Band 2, Seiten 511-515, IEEE, New York, US; G.K. RAMBALLY et al.: "A natural language interface for the VAX/VMS operating system" | | G 06 F 15/00 |

Der vorliegende Recherchenbericht wurde für alle Patentansprüche erstellt

| Recherchenort | Abschlußdatum der Recherche | Prüfer |
|---|---|---|
| DEN HAAG | 17-10-1989 | POPINEAU G.J.P. |

EPO FORM 1503 03.82 (P0403)